# EUROPÄISCHE PATENTSCHRIFT

(11) **EP 0 460 009 B1**
(45) Veröffentlichungstag und Bekanntmachung des Hinweises auf die Patenterteilung: **05.10.1994**
(21) Anmeldenummer: 90903359.9
(22) Anmeldetag: 22.02.1990
(51) Int. Cl.: B60R 22/36

(54) **SICHERHEITSGURTAUFROLLAUTOMAT**
AUTOMATIC SAFETY BELT REEL
ENROULEUR AUTOMATIQUE DE CEINTURE DE SECURITE

(30) Priorität: 24.02.1989 DE 3905804
(43) Veröffentlichungstag der Anmeldung: 11.12.1991
(73) Patentinhaber: Autoliv-Kolb GmbH & Co., D-85203 Dachau (DE)
(72) Erfinder: HABERZETH, Thomas, D-8000 München 80 (DE)
(74) Vertreter: Lorenz, Eduard
(86) Internationale Anmeldenummer: EP9000303
(87) Internationale Veröffentlichungsnummer: WO9009910

(56) Entgegenhaltungen:
- WO-A-89/08570
- DE-A- 3 418 378
- DE-A- 3 421 960
- DE-A- 3 437 693
- US-A- 4 619 418

## Beschreibung

Die Erfindung betrifft einen Sicherheitsgurtaufrollautomaten nach dem Oberbegriff des Patentanspruchs 1.

Ein derartiger Sicherheitsgurtaufrollautomat ist beispielsweise aus DE-A-34 18 378 bekannt. Bei diesem Sicherheitsgurtaufrollautomaten ist eine Mechanikgrundplatte fest mit einem Rahmenschenkel verbunden. Ein Lagerzapfen dient einer Steuerscheibe als Drehpunkt. Die Wickelwelle, die in dieser Steuerscheibe gelagert ist, ist weiterhin mit einem Steuerrad fest verbunden. Wird nun einer der vorgesehenen Sensoren aktiviert, so wird das Steuerrad über eine Klinke fest mit der Steuerscheibe verbunden. Bei weiterem Gurtbandabzug dreht sich nun die Steuerscheibe mit der Wickelwelle um den Lagerzapfen, und die Wellenverzahnung kommt in Eingriff mit der gehäusefesten Verzahnung in den Rahmenschenkein. Durch die Sperrung des Steuerrades relativ zur Steuerscheibe wird bei diesem bekannten Gurtaufroller eine Synchronisation der Eingriffsbewegung in die gehäusefeste Verzahnung erreicht.

Beim Einsatz kann es vorkommen, daß kurz vor einem Unfall das Steuerrad sich in einer Lage befindet, in der die Aktivierung eines Sensors dazu führen würde, daß die entsprechende Klinke so auf dem Rücken eines Zahnes das Steuerrad trifft, daß sich die Wickelwelle um eine volle Zahnteilung weiterdrehen muß, bevor das Steuerrad gesperrt wird. Bei einem plötzlichen, ruckartigen Gurtbandauszug, wie er bei einem Unfall vorkommt, ist die Trägheit der Welle so groß, daß die Welle schneller nach oben gerissen wird, als sie sich um den entsprechenden Betrag weitergedreht hat. Es kommt folglich zu einer unsynchronen Einsteuerung in die gehäusefeste Verzahnung. Dabei kann es passieren, daß die Wellenverzahnung nicht zur vollkommenen Überdeckung mit der gehäusefesten Verzahnung kommt. In diesem Extremfall hält der bekannte Automat zwar noch den geforderten Belastungen stand, bewegt sich jedoch bereits im Randbereich der Forderungen.

Weiterhin läßt sich bei dem bekannten Sicherheitsgurtaufrollautomaten nicht mit Sicherheit ausschließen, daß sich die Wellenverzahnung bei sehr hoher Last aus der Gehäuseverzahnung herausdreht.

Es ist daher Aufgabe der Erfindung, einen Sicherheitsgurtaufrollautomaten nach dem Oberbegriff des Patentanspruchs 1 zu schaffen, bei dem auch bei einer unsynchronen Einsteuerung der Welle eine vollständige Überdeckung der Wellenverzahnung mit der Gehäuseverzahnung bei sicherem Zahneingriff erreicht wird.

Diese Aufgabe wird bei einem Sicherheitsgurtaufrollautomaten der gattungsgemäßen Art durch die kennzeichnenden Merkmale des Patentanspruchs 1 gelöst. Bei dem erfindungsgemäßen Sicherheitsgurtaufrollautomaten kommen die Wellen- und Gehäuseverzahnungen auch dann in einen richtigen Zahneingriff miteinander, wenn in dem beschriebenen Extremfall eine unsynchrone Einsteuerung erfolgen sollte.

Der erfindungsgemäß vorgesehene Hinterschnitt der Wellen- und Gehäuseverzahnung stellt sicher, daß sich die Wellenverzahnung bei sehr hoher Last nicht aus der Gehäuseverzahnung herausdrehen kann, sondern im Gegenteil in die gehäusefeste Verzahnung hineingezogen wird. In einem bevorzugten Ausführungsbeispiel ist die Welle so gelagert, daß sie beim Einsteuern in die gehäusefeste Verzahnung um einen gehäusefesten Punkt schwenkt, der auf einem Kreis um den Mittelpunkt der Welle in ihrer Ruhestellung mit dem Radius des Teilkreisdurchmessers liegt. Bei einer Positionierung der gehäusefesten Verzahnung, wie sie in Anspruch 3 beschrieben ist, kann der Bereich, der die Verzahnung trägt am größten vorgesehen und damit am besten die Kraft von der Welle auf das Rahmenblech übertragen werden. Der erste Zahn der gehäusefesten Verzahnung muß so positioniert sein, daß sich die Welle in ihrer Ruhestellung unbehindert drehen kann und auch bei minimalem Schwenkwinkel nicht sofort in Eingriff mit der gehäusefesten Verzahnung kommt. Der letzte Gehäusezahn muß so angeordnet sein, daß die Welle noch unbehindert ein- und ausschwenken kann. Das erste Drittel der gehäusefesten Verzahnung weist eine Abflachung auf. Wird die Welle in unsynchronisiertem Zustand hochgerissen, so setzen die Wellenzähne auf den Abflachungen der Gehäusezähne auf, und eine Einsteuerung wird verhindert. Ohne diese erfindungsgemäßen Abflachungen würde die Welle auch in diesem unsynchronisiertem Zustand einsteuern, könnte die Last aber nur auf die letzten Zähne der gehäusefesten Verzahnung übertragen. Bei sehr hoher Last kann das zum Abscheren der letzten Zähne und damit zum Durchrutschen der Welle führen. Bei der erfindungsgemäßen Verzahnung dagegen wird die Welle durch die Abflachungen an einer unsynchronen Einsteuerung gehindert. Bei weiterem Gurtbandauszug gleiten die Wellenzähne auf den Abflachungen der gehäusefesten Zähne soweit, bis eine synchronisierte Stellung erreicht ist. Um auch hier zu verhindern, daß die Welle bereits an den letzten Zähnen der gehäusefesten Verzahnung hängen bleibt, sind auch diese Zähne abgeflacht. Ist die synchronisierte Stellung erreicht, steuert die Welle bei weiterer Last vollkommen ein. Die Kraft kann nun über die gesamte Verzahnung von der Welle in das Rahmenblech übertragen werden.

Vorteilhafterweise ist die Wellenverzahnung so ausgebildet, daß sie ebenfalls Abflachungen aufweist, die auf dem Kopfkreis der Welle liegen. Hierdurch läßt sich ein besseres Gleiten auf den Abflachungen der Gehäuseverzahnung erreichen. Es besteht auch die Möglichkeit, den Zahnrückenwinkel der Wellenverzahnung kleiner als den entsprechenden Winkel der gehäusefesten Verzahnung auszubilden. Hierdurch entsteht bei der Einsteuerung zwischen beiden Verzahnungen etwas Spiel, so daß sich der Zeitraum, der für die Einsteuerung zur Verfügung steht, verlängert. Bei einer besonders vorteilhaften Ausgestaltung der Erfindung sind die gehäusefesten Verzahnungen auf beiden Seiten des Rahmenbleches um eine halbe Zahnteilung versetzt angeordnet. Das Rahmenblech ist so ausgebildet, daß die Verzahnung oder der gesamte Schenkel bei Last leicht verformbar ist. Wenn die Welle nun im Normalfall auf beiden Seiten gleichzeitig angehoben wird, so wird sie erst auf der Seite vollkommen einsteuern, auf der ihre Verzahnung der synchronisierten Stellung am nächsten ist. Bei weiterem Zug verformt sich der Rahmenschenkel oder die Verzahnung soweit, bis auch die andere Seite die synchronisierte Stellung erreicht hat und ebenfalls einsteuert. Wird die Welle jedoch z.B. durch einen Schrägzug des Gurtbandes ungleichmäßig angehoben, so daß sie erst auf einer Seite einsteuert, wäre die Wellenverzahnung auf der nacheilenden Seite bei einer symetrischen Anordnung der Gehäuseverzahnung bereits über ihre synchrone Stellung hinaus, und die Verzahnung der voreilenden Seite müßte sich um eine komplette Zahnteilung deformieren, bis auch die zweite Seite einsteuern kann. Durch das Versetzen der beiden gehäusefesten Verzahnungen um eine halbe Zahnteilung findet immer im Höchstfall eine Verformung um eine halbe Zahnteilung statt. Ein beidseitiger, voll lastaufnahmefähiger Eingriff ist dadurch gewährleistet.

Die Erfindung wird anhand der Zeichnung im folgenden näher erläutert. Es zeigt
- Figur 1:: Eine herkömmliche Wellen- und Gehäuseverzahnung im Zustand der unsynchronen Einsteuerung,
- Figur 2:: eine erfindungsgemäße Wellen- und Gehäuseverzahnung mit der Welle im Ruhezustand,
- Figur 3:: die Welle nach Figur 2 beim Versuch der unsynchronen Einsteuerung,
- Figur 4:: die Welle nach Figur 3 in weitergedrehtem und etwas weiter eingeschwenktem Zustand,
- Figur 5:: Wellen- und Gehäuseverzahnung nach den Figuren 2-4 in synchroner Stellung, kurz vor dem endgültigen Eingriff der Verzahnungen,
- Figur 6:: eine erfindungsgemäße Wellen- und Gehäuseverzahnung in vollem Eingriff.

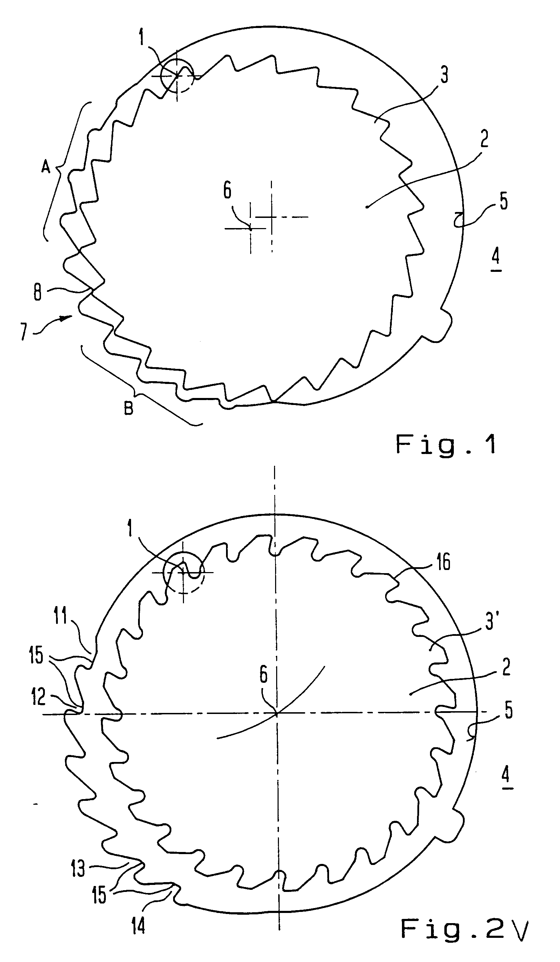

In Figur 1 ist eine nicht dargestellte Welle für einen Gurtbandwickel drehbar um den Schwenkpunkt 1 gelagert. Mit der Welle drehfest verbunden ist die Scheibe 2, die die Wellenverzahnung 3 trägt. Im Rahmenblech 4 ist der Ausschnitt 5 vorgesehen, in dem sich die Scheibe 2 mit ihrer Verzahnung 3 in der Ruhestellung ungehindert um ihre Achse 6 drehen kann. Die Gehäuseverzahnung 7 ist in herkömmlicher Weise ausgebildet. Wird nun die Welle in unsynchronisierter Stellung in ihre Blockierstellung verschwenkt, so kann es zu dem in Figur 1 gezeigten Zustand kommen. Im Bereich A der gehausefesten Verzahnung 7 haben die Zähne der Wellenverzahnung 3 bereits die Zahnspitzen passiert. Im Bereich B der gehäusefesten Verzahnung 7 dagegen haben die Zähne der Wellenverzahnung 3 die Spitzen der gehäusefesten Verzahnung noch nicht erreicht, so daß momentan nur ein Eingriff am Zahn 8 der gehäusefesten Verzahnung erfolgt. Bei weiterem Gurtbandabzug und dadurch erzwungener weiterer Einschwenkbewegung der Welle deformiert sich der Zahn 8 soweit, daß im Höchstfall noch die 2 nachfolgenden Zähne mit der Wellenverzahnung in Eingriff kommen. Tritt nun eine sehr hohe Last auf, die von den 3 in Eingriff befindlichen Zähnen nicht mehr gehalten werden kann, so wird zuerst der Zahn 8 abgeschert. Dadurch kann zwar der nächst Zahn in Eingriff mit der Wellenverzahnung gelangen, die Last wird jedoch immer höchstens von 3 Zähnen der gehäusefesten Verzahnung 7 getragen. Infolge dessen wird nacheinander jeder einzelne Zahn der gehäusefesten Verzahnung abgeschert und die Welle rutscht durch.

In den Figuren ist die erfindungsgemäße Verzahnung am gleichen Funktionsprinzip wie in Figur 1 beschrieben. In Figur 2 ist die Ruhestellung der Welle gezeigt. Die Scheibe 2, die die Wellenverzahnung 3' trägt, kann sich beim Aus- und Einrollen des Gurtbandes unbehindert um ihre Achse 6 drehen. Die Zähne 11 bis 14 der gehäusefesten Verzahnung sind hier mit Abflachungen 15 versehen. Auch die Zähne der Wellenverzahnung 3' sind mit Abflachungen 16 versehen, die auf dem Kopfkreis der Wellenverzahnung liegen.

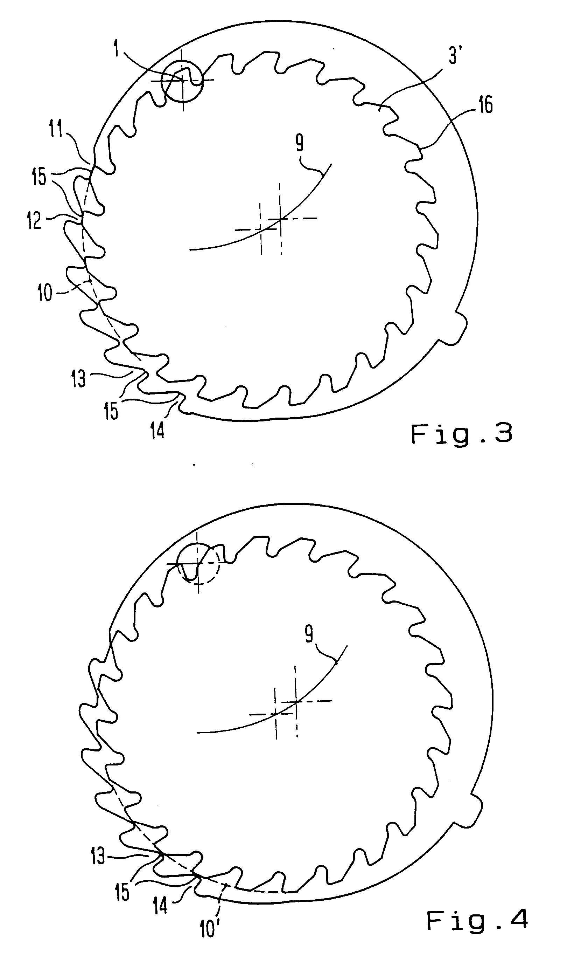

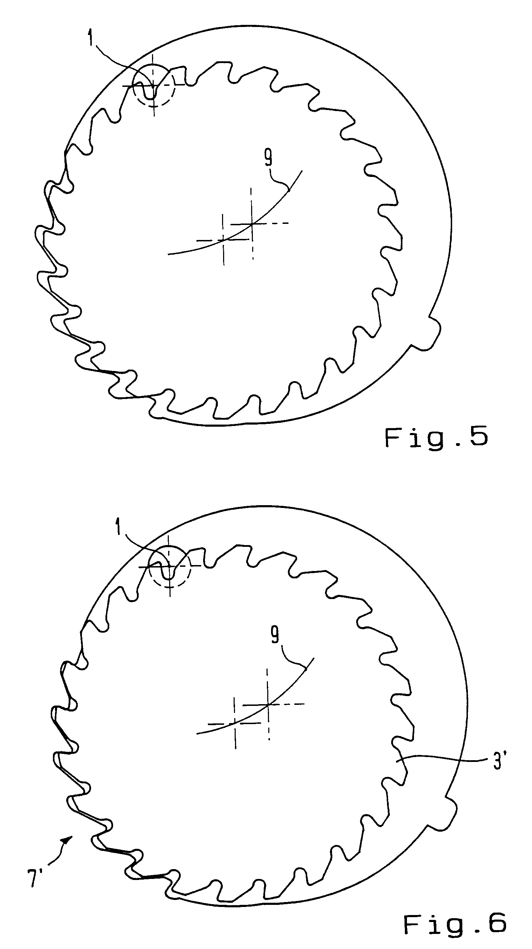

In Figur 3 wurde die Welle in unsynchronisiertem Zustand nach oben gerissen. Dabei wurde sie auf der Kreisbahn 9 um den Punkt 1 soweit geschwenkt, bis die Abflachungen 16 der Wellenzähne 3' an den Abflachungen 15 der gehäusefesten Zähne 11 und 12 anstehen. Die Abflachungen 15 liegen genau auf dem mit einer gestrichelten Linie angedeuteten Kopfkreis 10 der Wellenverzahnung 3' in dieser Position. Dadurch wird die Welle daran gehindert, weiter um den Punkt 1 zu schwenken. Auch die Zähne 13 und 14, die von der wellenfesten Verzahnung in der gezeigten Stellung noch nicht passiert wurden, sind mit einer Abflachung 15 versehen, so daß auch hier noch kein Zahneingriff erfolgen kann. Die genaue Ausbildung der Abflachung 15 an den Zähnen 13 und 14 geht aus Figur 4 hervor. Die Welle wurde hier soweit weitergedreht, daß der Teil der Wellenverzahnung, der in Figur 3 noch an den Abflachungen der Zähne 11 und 12 ansteht, diese bereits passiert hat und die Welle entlang der Bahn 9 um einen geringen Betrag weiter einschwenken kann. Die Abflachungen 15 der Zähne 13 und 14 liegen nun auf dem durch eine gestrichelte Linie angedeuteten Kopfkreis 10' der Welle in dieser Position. Durch eine weitere Verdrehung der Welle wurden in Figur 5 auch diese Abflachungen der gehäusefesten Verzahnung durch die Wellenverzahnung passiert und die Welle hat ihre synchrone Stellung erreicht. Nun kann die Welle weiter um den Punkt 1 auf der Kreisbahn 9 verschwenken bis ihre Verzahnung 3' in Figur 6 vollkommen zum Eingriff mit der gehäusefesten Verzahnung 7' kommt.

In diesem Zustand wird die Last, die auf die Welle wirkt, durch alle Zähne in das Rahmenblech übertragen. Die die Last übertragenden Zahnflanken der Wellen- und Gehäuseverzahnung wurden mit einem leichten Hinterschnitt versehen, um zum einen zu verhindern, daß sich die Wellenverzahnung bei sehr hoher Last aus der Gehäuseverzahnung hinausdreht und zum anderen, um bei der Schwenkung in die Eingriffstellung zu gewährleisten, daß die Wellenverzahnung sicher in die gehäusefeste Verzahnung hineingezogen wird.

## Patentansprüche

1. Sicherheitsgurt-Aufrollautomat mit einer drehbar gelagerten Wickelwelle zum Auf- und Abwickeln des entgegen einer Federkraft ausziehbaren Gurtes, mit mindestens einer Sensoreinrichtung, die auf eine ein bestimmtes Maß überschreitende Fahrzeugverzögerung anspricht, wobei die Wickelwelle vorzugsweise an beiden Enden mit einer Verzahnung versehen ist und zur Blockierung eine Schwenkbewegung durchführt, so daß die Wellenverzahnung mit einer gehäusefesten Verzahnung in Eingriff gelangt,
**dadurch gekennzeichnet,**
daß die gehäusefeste Verzahnung Abflachungen (15) aufweist, die eine Einsteuerung der Wellenverzahnung im unsynchronisierten Zustand verhindern, und daß die Gurtlast übertragende Zahnflanken der Wellen- und Gehäuseverzahnung einen Hinterschnitt in der Weise aufweisen, daß der durch die Zahnspitze gezogene und den Zahn nicht schneidende, vom Zahnradmittelpunkt ausgehende Radialstrahl zu der angrenzenden Zahnflanke geneigt ist.

2. Sicherheitsgurtaufrollautomat nach Anspruch 1, dadurch gekennzeichnet, daß die Welle beim Einsteuern in die gehäusefeste Verzahnung um einen gehäusefesten Punkt schwenkt, der auf einem Kreis um den Mittelpunkt der Welle in ihrer Ruhestellung mit dem Radius des Teilkreisdurchmessers liegt.

3. Sicherheitsgurtaufrollautomat nach Anspruch 2, dadurch gekennzeichnet, daß die Mitte der gehäusefesten Verzahnung auf einer Linie durch den Mittelpunkt der Welle in der eingerückten Stellung liegt, die senkrecht auf der Verbindungslinie dieses Mittelpunktes und dem Schwenkpunkt der Welle steht.

4. Sicherheitsgurtaufrollautomat nach Anspruch 3, dadurch gekennzeichnet, daß die gehäusefeste Verzahnung ca. 20 Grad in Gurtbandaufrollrichtung vom Schwenkpunkt der Welle her beginnt.

5. Sicherheitsgurtaufrollautomat nach Anspruch 3, dadurch gekennzeichnet, daß die nicht sperrende Flanke des letzten Gehäusezahns mit einer Verbindungslinie zwischen dem Schwenkpunkt der Welle und dem Punkt dieser Zahnflanke, der gleichzeitig ein Punkt des Fußkreises der Gehäuseverzahnung ist, einen Winkel bildet, der nicht kleiner als 90 Grad ist.

6. Sicherheitsgurtaufrollautomat nach Anspruch 5, dadurch gekennzeichnet, daß der Fußkreis der gehäusefesten Verzahnung auf dem Kopfkreis der Wellenverzahnung in eingeschwenktem Zustand der Welle liegt und daß zumindest die Basis der gehäusefesten Zähne eine den Zähnen der Wellenverzahnung angepaßte Form aufweisen.

7. Sicherheitsgurtaufrollautomat nach Anspruch 6, dadurch gekennzeichnet, daß der Zahnrückenwinkel der Wellenverzahnung kleiner ist als der entsprechende Winkel der gehäusefesten Verzahnung.

8. Sicherheitsgurtaufrollautomat, nach einem der vorstehenden Ansprüche, dadurch gekennzeichnet, daß ca. das erste Drittel der gehäusefesten Verzahnung eine Abflachung aufweist, die auf dem Kopfkreis der Wellenverzahnung liegt, wenn die Welle soweit geschwenkt ist, daß das erste Drittel der Gehäuseverzahnung bereits mit der Wellenverzahnung in Eingriff wäre.

9. Sicherheitsgurtautomat nach Anspruch 8, dadurch gekennzeichnet, daß die letzten Zähne der gehäusefesten Verzahnung ebenfalls eine Abflachung aufweisen, die auf dem Kopfkreis der Wellenverzahnung liegt, wenn die Welle soweit weitergedreht wurde, daß auch eine geringe weitere Einschwenkbewegung möglich war, wobei als letzte Zähne diejenigen Zähne bezeichnet sind, deren Zahnspitzen bei einer weiteren Einschwenkbewegung noch vor der Endstellung mit der Wellenverzahnung in Eingriff kommen würden.

10. Sicherheitsgurtaufrollautomat nach Anspruch 9, dadurch gekennzeichnet, daß die Wellenverzahnung spitzenlos ausgebildet ist und die Abflachungen auf dem Kopfkreis der Verzahnung liegen.

11. Sicherheitsgurtaufrollautomat nach Anspruch 1, dadurch gekennzeichnet, daß die gehäusefeste Verzahnung nach dem Einsteuern der Welle durch elastische Verformung ein Weiterdrehen der Welle in Gurtbandabzugsrichtung um den Betrag von einer Zahnlänge zuläßt.

12. Sicherheitsgurtaufrollautomat nach Anspruch 11, dadurch gekennzeichnet, daß im Rahmenblech über der gehäusefesten Verzahnung Ausstanzungen vorgesehen sind, die unter Last eine Verschiebung der gehäusefesten Verzahnung relativ zum Rahmenblech zulassen.

13. Sicherheitsgurtaufrollautomat nach Anspruch 11, dadurch gekennzeichnet, daß die Rahmenschenkel so an der Gehäuserückwand befestigt sind, daß unter Last ein leichtes Verbiegen der Rahmenschenkel relativ zur Gehäuserückwand möglich ist.

14. Sicherheitsgurtaufrollautomat nach Anspruch 11, dadurch gekennzeichnet, daß entweder die Wellenverzahnung der einen Seite gegenüber der anderen Seite oder die gehäusefeste Verzahnung der einen Seite gegenüber der anderen Seite um eine halbe Zahnteilung versetzt ist.

## Claims

1. An automatic safety belt reel with a winding shaft mounted for rotation for the winding up and unwinding of the belt which can be pulled out against a resilient force, with at least one sensor device which responds to a deceleration of the vehicle exceeding a certain extent, in which arrangement the winding shaft is provided with a tooth system, preferably at both ends, and performs a pivoting movement for the blocking action, so that the tooth system of the shaft comes to engage with a tooth system fixed to the housing,
**characterized in that**
the tooth system fixed to the housing has flattened portions (15) which prevent an engagement of the tooth system of the shaft in an unsynchronized state, and that the tooth flanks of the shaft and housing tooth systems transmitting the belt load have an undercut such that the radial line, starting from the centre of the gear wheel, that is drawn through the tooth tip and does not intersect the tooth, is inclined towards the adjoining tooth flank.

2. An automatic safety belt reel according to claim 1, characterized in that during the engagement in the tooth system fixed to the housing, the shaft is pivoted round a point fixed to the housing, which lies on a circle round the centre of the shaft in its rest position having the radius of the pitch circle diameter.

3. An automatic safety belt reel according to claim 2, characterized in that the centre of the tooth system fixed to the housing lies on a line through the centre of the shaft in the engaged position which is disposed perpendicularly to the line connecting this centre and the pivoting point of the shaft.

4. An automatic safety belt reel according to claim 3, characterized in that the tooth system fixed to the housing starts approximately 20 degrees in the winding-up direction of the belt from the pivoting point of the shaft.

5. An automatic safety belt reel according to claim 3, characterized in that the non-locking flank of the last tooth of the housing forms, with a connecting line between the pivoting point of the shaft and the point of this tooth flank which is at the same time a point of the root circle of the tooth system fixed to the housing, an angle which is not less than 90 degrees.

6. An automatic safety belt reel according to claim 5, characterized in that in the swung-in state of the shaft, the root circle of the tooth system fixed to the housing lies on the addendum circle of the tooth system of the shaft, and that at least the base of the teeth fixed to the housing has a shape adapted to the teeth of the tooth system of the shaft.

7. An automatic safety belt reel according to claim 6, characterized in that the tooth-back angle of the tooth system of the shaft is smaller than the corresponding angle of the tooth system fixed to the housing.

8. An automatic safety belt reel according to one of the preceding claims, characterized in that approximately the first third of the tooth system fixed to the housing has a flattened portion which lies on the addendum circle of the shaft tooth system when the shaft has been pivoted to such an extent that the first third of the tooth system fixed to the housing would already be in engagement with the tooth system of the shaft.

9. An automatic safety belt reel according to claim 8, characterized in that the last teeth of the tooth system fixed to the housing also have a flattened portion which lies on the addendum circle of the tooth system of the shaft, when the shaft has been rotated further to such an extent that a further small swinging-in movement was also possible, in which connection those teeth are designated as the last teeth, whose tooth tips would come into engagement with the shaft tooth system even before the final position.

10. An automatic safety belt reel according to claim 9, characterized in that the shaft tooth system is designed without tips and that the flattened portions lie on the addendum circle of the tooth system.

11. An automatic safety belt reel according to claim 1, characterized in that after the engagement of the shaft, the tooth system fixed to the housing permits by elastic deformation a further rotation of the shaft in the belt extraction direction to the extent of one tooth length.

12. An automatic safety belt reel according to claim 11, characterized in that in the sheet metal of the frame, provision is made above the tooth system fixed to the housing for cutouts which, under loading, permit a displacement of the tooth system fixed to the housing relative to the sheet metal of the frame.

13. An automatic safety belt reel according to claim 11, characterized in that the frame sides are secured on the rear side of the housing, in such a way that under loading a slight bending of the frame sides relative to the rear side of the housing is possible.

14. An automatic safety belt reel according to claim 11, characterized in that either the shaft tooth system of one side is offset relative to the other side, or the tooth system fixed to the housing of the one side, is offset relative to the other side by half a tooth pitch.

## Revendications

1. Enrouleur automatique de ceinture de sécurité comportant un arbre d'enroulement logé de manière à pouvoir tourner pour enrouler et dérouler la ceinture qui peut être extraite contre la force d'un ressort, comportant au moins un dispositif capteur qui réagit à une décélération dépassant une mesure déterminée, l'arbre d'enroulement étant de préférence pourvu aux deux extrémités d'une denture et exécutant un mouvement de pivotement pour le blocage de sorte que la denture de l'arbre entre en prise avec une denture solidaire du boîtier,
caractérisé en ce que
la denture solidaire du boitier présente des replats (15) qui empêchent l'engagement de la denture de l'arbre à l'état non-synchronisé et que les flancs de dents des dentures de l'arbre et du boitier qui transmettent la charge de la ceinture présentent une contre-dépouille telle que le rayon radial tracé à travers la pointe de la dent et ne coupant pas la dent, partant du centre de la roue dentée, est incliné vers le flanc de dent adjacent.

2. Enrouleur automatique de ceinture de sécurité selon la revendication 1, caractérisé en ce que l'arbre, lorsqu'il effectue le mouvement d'engagement dans la denture solidaire du boîtier, pivote autour d'un point fixe du boîtier qui se trouve sur un cercle autour du point central de l'arbre dans sa position de repos avec le rayon du diamètre de cercle partiel.

3. Enrouleur automatique de ceinture de sécurité selon la revendication 2, caractérisé en ce que le centre de la denture solidaire du boîtier se trouve sur une ligne à travers le point central de l'arbre dans la position engagée, qui se trouve perpendiculairement sur la ligne de raccordement de ce point central et du point de pivotement de l'arbre.

4. Enrouleur automatique de ceinture de sécurité selon la revendication 3, caractérisé en ce que la denture solidaire du boîtier commence à environ 20°, en direction de l'enroulement de la ceinture, du point de pivotement de l'arbre.

5. Enrouleur automatique de ceinture de sécurité selon la revendication 3, caractérisé en ce que le flanc bloquant de la dernière dent du boitier forme un angle qui n'est pas inférieur à 90° avec une ligne de raccordement entre le point de pivotement de l'arbre et le point de ce flanc de dent qui est à la fois un point du cercle de base de la denture du boitier.

6. Enrouleur automatique de ceinture de sécurité selon la revendication 5, caractérisé que le cercle de base de la denture solidaire du boîtier se trouve sur le cercle du haut de la denture de l'arbre à l'état pivoté de l'arbre et qu'au moins la base des dents solidaires du boitier présentent une forme adaptée à la denture de l'arbre.

7. Enrouleur automatique de ceinture de sécurité selon la revendication 6, caractérisé en ce que l'angle du dos de la dent de la denture de l'arbre est inférieur à l'angle correspondant de la denture solidaire du boîtier.

8. Enrouleur automatique de ceinture de sécurité selon l'une quelconque des revendications précédentes, caractérisé en ce qu'environ le premier tiers de la denture solidaire du boîtier présente un replat qui se trouve sur le cercle du haut de la denture de l'arbre lorsque l'arbre est pivoté au point où le premier tiers de la denture de boitier se trouverait déjà en prise avec la denture de l'arbre.

9. Enrouleur automatique de ceinture de sécurité selon la revendication 8, caractérisé en ce que les dernières dents de la denture solidaire du boitier présentent également un replat qui se trouve sur le cercle du haut de la denture de l'arbre lorsque l'arbre a continué d'être pivoté au point où un faible mouvement supplémentaire de pivotement était encore possible, les dernières dents étant les dents dont les pointes de dents entreraient en prise, encore avant la position finale, avec la denture de l'arbre lors d'un mouvement de pivotement supplémentaire.

10. Enrouleur automatique de ceinture de sécurité selon la revendication 9, caractérisé en ce que la denture de l'arbre est formée sans pointes et que les replats se trouvent sur le cercle du haut de la denture.

11. Enrouleur automatique de ceinture de sécurité selon la revendication 1, caractérisé en ce que la denture solidaire du boîtier permet après le mouvement d'engagement de l'arbre une rotation ultérieure, de la distance d'une longueur de dent, de l'arbre en direction du déroulement de la ceinture.

12. Enrouleur automatique de ceinture de sécurité selon la revendication 11, caractérisé en ce que des perforations sont prévues dans la tôle du cadre au-dessus de la denture solidaire du boitier qui, sous charge, permettent un déplacement de la denture solidaire du boîtier par rapport à la tôle du cadre.

13. Enrouleur automatique de ceinture de sécurité selon la revendication 11, caractérisé en ce que les branches du cadre sont fixées à la paroi arrière du boitier de manière à ce que, sous charge, une légère déformation des branches du cadre par rapport à la paroi arrière du boîtier est possible.

14. Enrouleur automatique de ceinture de sécurité selon la revendication 11, caractérisé en ce que soit la denture de l'arbre de l'un des côtés par rapport à l'autre, soit la denture solidaire du boîtier de l'un des côtés par rapport à l'autre est décalée d'une demie subdivision de dent.
